(19) Europäisches Patentamt
European Patent Office
Office européen des brevets

(11) **EP 3 190 354 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(51) Int Cl.:
***F24S 70/25*** *(2018.01)*  ***F24S 70/30*** *(2018.01)*

(21) Anmeldenummer: **17151036.5**

(22) Anmeldetag: **11.01.2017**

(54) **MEHRSCHICHTMATERIALFOLGE ZUR ENERGIEGEWINNUNG AUS SONNENLICHT, DEREN HERSTELLUNG SOWIE DEREN VERWENDUNG**

MULTILAYER MATERIAL SEQUENCE FOR GENERATING ENERGY FROM SUNLIGHT, THEIR PREPARATION AND THEIR USE

SÉQUENCE DE MATÉRIAU MULTICOUCHE DESTINÉE À LA PRODUCTION D'ÉNERGIE À PARTIR DE LA LUMIÈRE SOLAIRE, SA PRODUCTION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2016 DE 102016100355**

(43) Veröffentlichungstag der Anmeldung:
**12.07.2017 Patentblatt 2017/28**

(73) Patentinhaber: **Institut für Solarenergieforschung GmbH**
**31860 Emmerthal (DE)**

(72) Erfinder: **Pazidis, Alexandra**
**73457 Essingen (DE)**

(74) Vertreter: **Sperschneider, Alexandra**
**Die Patenterie GbR**
**Patent- und Rechtsanwaltssozietät**
**Leibnizstraße 6**
**95447 Bayreuth (DE)**

(56) Entgegenhaltungen:
**EP-A2- 2 312 234         DE-A1-102012 109 691**
**DE-A1-102013 110 118    US-A1- 2004 155 154**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Mehrschichtmaterialabfolge zur Energiegewinnung aus Sonnenlicht gemäß dem Oberbegriff des Patentanspruches 1, deren Verwendung sowie einem Verfahren zur Herstellung der Mehrschichtmaterialabfolge.

Aus dem Stand der Technik sind unterschiedliche Möglichkeiten zur Energiegewinnung aus Sonnenlicht bekannt. So gibt es beispielsweise Photovoltaikanlagen, welche Sonnenlicht in elektrische Energie umwandeln. Ist hingegen das Bestreben vorhanden, Heizwasser eines Einfamilienhauses zu erwärmen, so bieten sich hierbei thermische Solarkollektoren an. Thermische Solarkollektoren sind derart aufgebaut, dass sie die eintreffende Sonnenenergie absorbieren und die daraus resultierende Wärmeenergie auf beispielsweise das Heizwasser übertragen. Somit kann auf elektrische Wärme zur Aufheizung von Heizwasser vollständig verzichtet werden, was zu einer deutlichen Kosteneinsparung führt. Ein solcher Solarkollektor ist beispielsweise aus der DE 10 2013 110 118 A1 bekannt. Dieser bekannte Solarkollektor weist eine mehrschichtige Absorberschicht auf, bei der wenigstens eine der Absorptionsschichten aus Titanoxycabid mit variablen Stöchiometriekoeffizienten hergestellt ist.

Übliche Solarkollektoren aus dem Stand der Technik neigen aufgrund ihrer physikalischen Ausbildung häufig dazu, dass bei zu starker Sonneneinstrahlung unter gleichzeitiger hoher Außentemperatur die seitens der Solarkollektoren erzeugte Wärme nicht mehr ausreichend über das zu erwärmende Heizmedium abgeführt werden kann. Folglich absorbieren die bekannten Solarkollektoren weiterhin Wärmeenergie aus der Sonneneinstrahlung und erhitzen zugleich deutlich. Diese Erhitzung bedingt eine physikalische Überbeanspruchung der in den Solarkollektoren verwendeten Materialien, so dass der Alterungsprozess bzw. die Degradation deutlich schneller voranschreitet und die Solarkollektoren häufig noch vor ihrer Amortisierung ausgetauscht bzw. ersetzt werden müssen. Bekannte Alterungsprozesse sind beispielsweise das Ablösen innenliegender Beschichtungen, welche durch die hohe Temperaturbeaufschlagung Spannungen unterliegen und somit aufreißen und abplatzen. Dies führt zu einer verminderten Effektivität.

Demzufolge liegt der vorliegenden Erfindung die Aufgabe zugrunde, eine Mehrschichtmaterialabfolge für Solarkollektoren zur Verfügung zu stellen, welche alterungsbeständiger und kostengünstiger ausgebildet ist, als bekannte Solarkollektoren. Darüber hinaus ist es ebenfalls Aufgabe der vorliegenden Erfindung ein Herstellungsverfahren bereitzustellen, welches einfacher und mit reduzierten Prozessschritten verbesserte Produkteigenschaften im Sinne auf die Alterungsbeständigkeit liefert.

Diese Aufgabe wird gemäß den Merkmalen des Patentanspruches 1, sowie des Verfahrensanspruches 11 gelöst.

Ein wesentlicher Punkt der Erfindung liegt darin, die Mehrschichtmaterialabfolge zur Energiegewinnung aus Sonnenlicht vorteilhaft einen sandwichartigen Aufbau aufweist. Die erfindungsgemäße Mehrschichtmaterialabfolge weist wenigstens drei Materialschichten auf. Als Basis dient ein Trägersubstrat mit reflektierenden Eigenschaften wenigstens im Infrarotwellenlängenbereich. Auf diesem Trägersubstrat ist eine Spacerschicht aufgebracht.

Sie schafft eine Beabstandung zwischen Trägersubstrat und weiteren, auf der Spacerschicht aufgebrachten Folgeschichten.

Die Spacerschicht ist derart ausgebildet, dass sie die reflektierende Eigenschaft des Trägersubstrats wenigstens im Infrarotwellenbereich weitgehend nicht beeinträchtigt, vorteilhafter nicht beeinträchtigt. Somit ist die Spacerschicht transparent wenigstens im Infrarotwellenbereich ausgebildet. Eine weitere vorteilhafte Eigenschaft der Spacerschicht ist, dass diese auch absorbierend für solares Licht ausgebildet ist. Hierdurch kann sichergestellt werden, dass die Spacerschicht einen möglichst hohen Effektivitätsbeitrag zur Wärme und/oder Warmwassererzeugung liefert.

Zumindest teilweise ist auf der Spacerschicht eine weitere Materialschicht, im Folgenden als Folgeschicht bezeichnet, aufgebracht.

Diese Folgeschicht weist vorteilhaft absorbierende Eigenschaften auf und ist folglich geeignet, eintreffende Strahlung in Wärmeenergie umzuwandeln und/oder als Wärmeenergie aus der Mehrschichtmaterialabfolge abzuführen. Selbstverständlich ist dies nicht begrenzend zu verstehen, so dass es auch denkbar ist, die wenigstens eine Folgeschicht nicht absorbierend für solares Licht auszubilden und die Absorption lediglich über die Spacerschicht erfolgen zu lassen. Ferner wäre auch denkbar, dass sowohl Spacerschicht als auch wenigstens eine Folgeschicht absorbierend für solares Licht ausgebildet sind.

Darüber hinaus weist die Folgeschicht die vorteilhafte Materialeigenschaft auf, dass sie wenigstens ein Material aufweist, dessen elektrische Leitfähigkeit durch Wärme-und/oder Strahlungsbeaufschlagung veränderbar ausgebildet ist.

Durch Änderung der elektrischen Leitfähigkeit der Folgeschicht bedingt sich zugleich eine Änderung des Emissionsgrades. Zudem wird ebenfalls das Interferenzverhalten der Folgeschicht und somit auch der gesamten Mehrschichtmaterialabfolge beeinflusst. Durch die Änderung der Leitfähigkeit des wenigstens einen Materials in der Folgeschicht ändern sich darüber hinaus auch Brechzahl und Extinktionskoeffizient, insbesondere im Infrarot-Spektralbereich. Durch eine Phasenverschiebung und/oder durch Amplitudenangleich der von dem Trägersubstrat reflektierten Strahlung wird eine destruktive Interferenz erzeugt, wodurch die Reflexion verringert wird. Folglich nimmt die Änderung der Leitfähigkeit Einfluss auf das Reflexionsverhalten der Mehrschichtmaterialabfolge.

Bei Solarkollektoren spielt neben der Absorption und Reflexion zudem auch der Emissionsgrad eine Rolle. Der Emissionsgrad einer Materialschicht gibt an, wie viel Strahlung die Materialschicht im Vergleich zu einem idealen Wärmestrahler, nämlich einem schwarzen Strahler, abgibt. Auch der Emissionsgrad ist aufgrund seines Zusammenhangs mit der Reflexion über die Änderung der elektrischen Leitfähigkeit steuerbar. Wird beispielsweise ein geringer Emissionsgrad ermittelt, so bedeutet dies eine geringe Abstrahlung, beispielsweise Wärmeabstrahlung, und eine hohe Reflexion. Wird andererseits ein hoher Emissionsgrad ermittelt, so bedeutet dies eine hohe Abstrahlung und eine geringe Reflexion.

Wenigstens ein Materialanteil der Folgeschicht ist mit veränderbarer elektrischer Leitfähigkeit ausgebildet.

Erst die Ausbildung der Folgeschicht mit veränderbarer elektrischer Leitfähigkeit ermöglicht die optische Schaltung.

Bei der Schichtabfolge der Mehrschichtmaterialabfolge weisen die Folgeschicht und/oder die Spacerschicht wenigstens einen unterstöchiometrischen Materialanteil auf.

Es ist also denkbar, dass beide Schichten für sich jeweils einen unterstöchiometrischen Materialanteil aufweisen. Unter unterstöchiometrisch sind vorteilhaft Oxidverbindungen und/oder Nitridverbindungen zu verstehen, welche unter Sauerstoff- und/oder Stickstoffdefizit hergestellt wurden. Aufgrund des gänzlich fehlenden und/oder reduzierten Vorhandenseins des Sauerstoffs und/oder Stickstoffs während des Herstellungsverfahrens, erfolgt lediglich eine unvollständige Oxid- und/oder Nitridausbildung in der Folgeschicht und/oder der Spacerschicht. Folglich weisen Folgeschicht und/oder Spacerschicht ein Sauerstoff- und/oder Stickstoffdefizit auf.

Dies hat sich hierbei vorteilhaft gezeigt, da durch die unterstöchiometrische Ausbildung wenigstens eines Materialanteils der Folgeschicht und/oder der Spacerschicht eine hohe solare Absorption des absorbierenden Materials einstellbar ist bzw. eingestellt werden kann. Dies bedingt wiederum eine hohe Absorption im gewünschten Arbeitsbereich, also unterhalb der Schalttemperatur des Materials. Vorteilhaft weist das absorbierende Material unterhalb der Schalttemperatur im Wesentlichen die optischen Kennzahlen von nicht-schaltenden Schichten auf, so dass absorbierendes Material und/oder absorbierende Materialschicht und nicht schaltende Schicht den gleichen solaren Deckungsgrad aufweisen.

Unter solarem Deckungsgrad ist vorteilhaft synonym zum Begriff solarer Absorptionsgrad zu verstehen.

Um ein absorbierende Materialschicht, vorteilhaft auch einfach Absorber genannt, quantitativ zu charakterisieren, wird deren Absorption $A$ in Abhängigkeit der Wellenlänge $\lambda$ und des Einfallswinkels $\theta$ ermittelt, mit dem solaren Intensitätsspektrum $S(\lambda)$ gewichtet und über den gesamten Spektralbereich integriert. Der resultierende Wert wird solarer Absorptionsgrad $\alpha$ genannt.

$$\alpha(\theta) = \frac{\int_0^\infty A(\lambda, \theta)\, S(\lambda)\, d\lambda}{\int_0^\infty S(\lambda)\, d\lambda} \tag{1}$$

Da das solare Spektrum auf Meeresniveau nur im Bereich zwischen 300 und 2500nm wesentlich von Null verschieden ist, kann die Integration auf diesen Bereich eingeschränkt werden. Da es sich weiterhin bei einem Absorber um ein intransparentes Substrat handelt, bei dem keine Transmission vorhanden ist, kann die Absorption durch die einer Messungen leichter zugänglichen Reflektivität ersetzt werden.

Dies erfolgt über $A(\lambda, \theta)=1-R(\lambda, \theta)$. Üblicherweise wird nur die Reflektivität bei nahezu senkrechtem Lichteinfall berücksichtigt, da die Kollektoren zum besten Sonnenstand ausgerichtet werden, d.h. zu Zeitpunkten mit großer einfallender Strahlungsleistung handelt es sich um eine gute Näherung und bei Zeitpunkten mit großen Einfallswinkeln ist die einfallende Strahlungsleistung und somit auch der Beitrag zur solaren Energiegewinnung nur gering.

Zusammenfassend ergibt sich:

$$\alpha = \frac{\int_{300\,nm}^{2500\,nm} \left(1 - R(\lambda)\right) S(\lambda)\, d\lambda}{\int_{300\,nm}^{2500\,nm} S(\lambda)\, d\lambda} \tag{2}$$

Ferner hat es sich als vorteilhaft erwiesen, wenn die unterstöchiometrische Ausbildung wenigstens eines Materialanteils in der Spacerschicht in dieser gleichmäßig verteilt ausgebildet ist. Hierdurch wird ein gleichmäßiges Reflexionsverhalten bedingt. Dies ist aber nicht beschränkend zu verstehen, sodass es sich in einer anderen Ausführungsform ebenfalls als vorteilhaft erwiesen hat, die unterstöchiometrische Ausbildung wenigstens eines Materialanteils in einem vorbestimmten Bereich der Spacerschicht vorzusehen. Hierbei ist es besonders vorteilhaft, den unterstöchiometrischen Materialanteil in der Nähe des Trägersubstrats, also gegenüberliegend der Folgeschicht, vorzusehen. Der unterstöchiometrische Materialanteil kann hierbei als kontinuierliche Schicht im Herstellungsprozess vorgesehen werden oder aber auch einen Gradienten aufweisen. Hierbei hat es sich als weiterhin vorteilhaft erwiesen, wenn der Anteil des unterstöchiometrischen Materials der Spacerschicht in Richtung des Trägersubstrats zunimmt und zugleich in Richtung der Folgeschicht abnimmt. Diese besondere Gradientenausbildung des unterstöchiometrischen Materialanteils erweist sich insbesondere für das Reflexionsverhalten der Spacerschicht als vorteilhaft. So bleibt der obere Bereich der Spacerschicht, welcher der Folgeschicht zugewandt angeordnet ist, weitgehend transparent für die eintreffende Infrarotstrahlung. Vorteilhaft hat diese Infrarotstrahlung eine Wellenlänge im Bereich von 5-10 $\mu$m.

Weist weiterhin die Folgeschicht einen unterstöchiometrischen Materialanteil auf, so ist dies vorteilhaft für die Einstellung der optischen und/oder elektrischen Leitfähigkeit der Folgeschicht.

Für die verbesserte temperaturabhängige Schaltbarkeit der Folgeschicht und/oder der elektrischen Leitfähigkeit hat es sich als vorteilhaft erwiesen, den unterstöchiometrischen Materialanteil der Folgeschicht in dieser gleichmäßig, also gradientenfrei, bereitzustellen.

Die hier beschriebene Erfindung ermöglicht somit auch erstmalig die kontrollierte und vorbestimmbare Schaltung der Absorption. Dies bedeutet, dass es nun möglich ist, den Absorptionsgrad von Spacerschicht und/oder Folgeschicht gezielt einzustellen, indem geeignete Materialien in bestimmten Schichtfolgen bereitgestellt werden.

Es hat sich überraschender Weise gezeigt, dass dies über die zunächst hohe Einstellung des solaren Absorptionsgrades einer Mehrschichtmaterialabfolge im kalten, unbestrahlten Zustand erfolgt. Die hohe Einstellung des solaren Absorptionsgrades ergibt sich aus der unterstöchiometrischen Materialzusammensetzung der Spacer- und/oder Folgeschicht und/oder durch Beimischung wenigstens einen Metalls und/oder wenigstens eines metallischen Materials und/oder wenigstens einem elektrisch leitfähigen Material insbesondere in der Folgeschicht. Durch eine weitere Erhöhung der Leitfähigkeit der Folgeschicht weist diese bei Schaltung, also vorteilhaft in einem kritischen, vorbestimmbaren Temperaturbereich, nahezu rein reflektierende, spiegelnde Eigenschaften auf, was wiederum zu einem Absinken der Absorption und des solaren Absorptionsgrades führt. Folglich hat sich überraschender Weise gezeigt, dass über die Änderung der elektrischen Leitfähigkeit der solare Absorptionsgrad einstellbar ist.

Somit ist die Schaltung eines solaren Absorptionsgrades möglich. Unter solaren Wellenlängen sind Wellenlängen vorteilhaft im Bereich von 300 - 2500 nm zu verstehen.

Weitere vorteilhafte Ausführungsformen ergeben sich aus den Unteransprüchen.

Bei einer weiteren vorteilhaften Ausführungsform weist die Spacerschicht und/oder die Folgeschicht wenigstens ein Metalloxid und/oder wenigstens ein Metallnitrid und/oder wenigstens eine Metalloxynitrid auf. Dies ist vorteilhaft für die absorbierenden Eigenschaften der Spacerschicht und/oder Folgeschicht. Diese werden durch das wenigstens eine Metalloxid und/oder wenigstens ein Metallnitrid und/oder wenigstens Metalloxynitrid deutlich verbessert.

Weist die Spacerschicht wenigstens ein Metalloxid und/oder ein Metallnitrid auf, so ist dies vorteilhaft für deren Reflexionsverhalten im Infrarotwellenlängenbereich. Derartige Oxide und/oder Nitride weisen die vorteilhafte Materialeigenschaft auf, dass sie im Infrarot-Wellenlängenbereich (weitgehend) transparent ausgebildet sind und somit die eintreffende Strahlung diese Schichten absorptionsfrei durchdringen kann. Vorteilhaft werden für die Metalloxide und/oder -nitride und/oder -oxynitride Metalle aus der Gruppe Lanthan, Yttrium, Cerium, Hafnium, Magnesium, Silizium, Aluminium, Chrom, Titan, Zink, Zinn, Zirkonium, Blei, Tantal, Nickel, Kupfer, wenigstens eine Legierung mit wenigstens einem dieser Metalle und/oder eine Kombination aus diesen Metallen ausgewählt. So sind beispielsweise Verbindungen wie Siliziumdioxid, Aluminium(III)oxid, Titandioxid, Chromoxynitrid, Siliziumnitrid unterstöchiometrisch einsetzbar.

Mögliche Oxidationszustände sind hierbei $Metall_y\text{-}O_{2-x}$ wobei vorteilhaft $0<x<2$, $Metall_y\text{-}O_{3-x}$ wobei vorteilhaft $0<x<3$, $Metall_y\text{-}O_{4-x}$ wobei vorteilhaft $0<x<4.6$, $Metall_y\text{-}O_{5-x}$ wobei vorteilhaft $0<x<5$, $Metall_y\text{-}O_{6-x}$ wobei vorteilhaft $0<x<6.7$, $Metall_y\text{-}O_{7-x}$ wobei vorteilhaft $0<x<7.9$. Weiterhin vorteilhaft ist $y$ eine natürliche Zahl. Selbst verständlich ist hierbei das Oxid durch ein Nitrid unproblematisch austauschbar, so das sich beispielsweise ein Metallnitrid $Metall_y\text{-}N_{3-x}$, wobei vorteilhaft $0<x<3.5$, ergibt. Für den Metallanteil hat sich vorteilhaft $0<y<250$ gezeigt.

Darüber hinaus habe sich auch Metalloxynitride als vorteilhaft Bestandteile der Spacerschicht und/oder der Folgeschicht gezeigt. Besonders vorteilhaft sind Zusammensetzungen $Cr_2O_aN_b$ mit $3{*}b + 2{*}a < 6$.

Selbstverständlich ist dies nicht begrenzend und zu verstehen, so das neben Metalloxiden und/oder Metallnitriden auch - fluoride und/oder -sulfide einsetzbar sind.

Darüber hinaus ist ebenfalls denkbar, dass die Spacerschicht aus reinem Silizium, Siliziumcarbid, unterschiedlichen Silanen mit $Si_nH_{2n+2}$ oder Germanium ausgebildet ist. Auch diese Materialien weisen vorteilhaftes Reflexionsverhalten auf und sind weitgehend transparent für Infrarotwellenlängenbereiche.

Die Spacerschicht hat sich zudem dahingehend als vorteilhaft erwiesen, dass durch diese Abstandsschicht zwischen Folgeschicht und Trägersubstrat die Sensitivität der gesamten Materialschichtabfolge auf die Leitfähigkeitsänderung besser eingestellt werden kann. Insbesondere erfolgt die Einstellung dann einfacher und vorteilhafter, wenn die Spacerschicht eine Schichtdicke von ¼ $\lambda$ aufweist. Die Wellenlänge $\lambda$ ist vorteilhaft kleiner 10 $\mu$m gewählt. Bei dieser Schichtdicke von ¼ $\lambda$ ist die Spacerschicht im Infrarotwellenlängenbereich weitgehend transparent ausgebildet. Das Maximum des elektrischen Feldes liegt an der oberen Grenzfläche zwischen Spacerschicht und Folgeschicht und/oder bereits innerhalb der Folgeschicht, so dass die Materialschicht Abfolge besonders stark auf eine Änderung der Extinktion und damit der Leitfähigkeit reagiert. Zusätzlich wird vorteilhaft ein weiterer Freiheitsgrad geschaffen. Weist die Folgeschicht bereits eine hohe Leitfähigkeit auf, genügt eine geringe Schichtdicke von wenigen Nanometern. Hat die Folgeschicht hingegen nur eine geringe Leitfähigkeit, so bedarf es einer größeren Schichtdicke, um gleiche Absorptionseigenschaften wie bei der dünneren Schicht mit hoher Leitfähigkeit zu erzielen. Selbstverständlich ist auch denkbar, die Spacerschicht mehrschichtig aufzubauen, beispielsweise aus oben genannten Oxiden und Nitriden.

Bei einer weiteren vorteilhaften Ausführungsform ist das Trägersubstrat aus Metall und/oder zumindest teilweise aus Metalloxid ausgebildet. Dies ist von Vorteil, da derartige metallische Substrate reflektierenden Eigenschaften für auf das Substrat eintreffende Infrarotstrahlung aufweisen. Neben den klassischen Metallen ist auch denkbar, dass Trägersubstrat aus einem Übergangsmetall auszubilden. Besonders vorteilhaft haben sich hierbei Aluminiumsubstrate, Kupfersubstrate, Stahlsubstrate oder auch Kunststoffsubstrate erwiesen.

Insbesondere massive Aluminiumsubstrate, an deren Luft-Material-Grenzfläche stets eine Aluminiumoxid-Passivierungsschicht von wenigen Nanometern angeordnet ist, weisen hervorragende Reflexionseigenschaften auf. Darüber hinaus ist Aluminium selbst ein sehr leichtes Material, so dass die Materialschicht Abfolge selbst ein geringes Eigengewicht aufweist. Dies ist insbesondere für die Verwendung der Materialschichtabfolge als Solarkollektor von Vorteil, da hierdurch die Dachlast deutlich reduziert werden kann und zugleich ausreichende Stabilität und Korrosionsbeständigkeit gegeben ist.

Neben den reinen Metall-oder Stahlsubstrate sind selbstverständlich auch Kunststoffsubstrate von Vorteil, aufgrund deren geringen Eigengewichts. Die Kunststoffsubstrate weisen bei Verwendung dann aber wenigstens eine Metallbeschichtung der oben genannten Metalle und/oder Metalloxide auf, um dem Kunststoffsubstrat auch die notwendigen Reflexionseigenschaften im Infrarotwellenlängenbereich zu vermitteln. Je nach Ausführungsform können diese Beschichtungen im Bereich von 0,005 $\mu$m bis 20 $\mu$m ausgebildet sein. Als besonders vorteilhafte Schichtdicke für gute reflektierende Eigenschaften hat sich ein Bereich von 0,01$\mu$m bis 1 $\mu$m, noch vorteilhaft ein Bereich von 0,06 bis 0,12 $\mu$m, erwiesen.

Bei einer weiteren vorteilhaften Ausführungsform weist die Folgeschicht wenigstens ein thermochromes Material auf. Unter thermochrom ist vorteilhaft zu verstehen, dass das Material seine Absorptionseigenschaft in Abhängigkeit von der Temperatur ändert. Folglich ist das thermochrome Material als optischer Schalter zu verstehen. Dies ist von Vorteil, da je nach Temperaturbeaufschlagung die Absorption oder die Reflexion überwiegt und somit auch die Temperatur der Mehrschichtmaterialabfolge gezielt gesteuert werden kann, um Überhitzungen und Materialalterung deutlich zu verringern.

Bei einer weiteren vorteilhaften Ausführungsform weist das thermochrome Material wenigstens teilweise Vanadium und/oder wenigstens ein Vanadiumoxid auf. Insbesondere Vanadium(IV)-oxid erweist sich als vorteilhaftes thermochromes Material, da dieses Oxid zwei verschiedene, temperaturabhängige Modifikationen im Kristallgitter aufweist, welche sich aber reversibel ineinander umwandeln. Herrscht eine Temperatur von kleiner 70 °C vor, liegt das Vanadium(IV)-oxid in einen der verzerrten Rutil-Struktur vor und weist Halbleitereigenschaften auf. Wird nun die Temperatur auf größer 70 °C erhöht, richtet sich das Kristallgitter zu einer unverzerrten Rutil-Struktur aus, welche metallische Eigenschaften und zugleich eine deutlich erhöhte elektrische Leitfähigkeit aufweist.

Durch diese vorteilhafte Umwandlung ist es möglich, dass die Folgeschicht in einem unteren Temperaturbereich, vorteilhaft von kleiner 70 °C, einen geringeren Emissionsgrad aufweist, als bei Temperaturen von größer 70 °C. Dies ist vorteilhaft, um der Überhitzung eines Solarkollektors mit der Mehrschichtmaterialabfolge zu vermeiden. Bei Temperaturen von größer 70 °C liegt folglich ein hoher Emissionsgrad vor, welcher zugleich eine hohe Abstrahlung bedingt. Folglich ist die Mehrschichtmaterialabfolge bei Temperaturen von größer 70 °C selbst in der Lage, Wärmeenergie abzustrahlen, wodurch die Überhitzungsgefahr der Mehrschichtmaterialabfolge selbst deutlich verringert wird. Zugleich wird ebenfalls einer weiteren Erwärmung der Mehrschichtmaterialabfolge vorgebeugt.

Bei einer weiteren vorteilhaften Ausführungsform ist das thermochrome Material unterstöchiometrisch abgeschieden ausgebildet. Vorteilhaft ist die gesamte Folgeschicht aus dem thermochrome Material vollständig ausgebildet. Ist dieses unterstöchiometrisch abgeschieden, bedeutet dies Fehlstellen im Kristallgitter des Materials, besonders vorteilhaft des Vanadium(IV)-oxids, und/oder Ladungsüberschuss, wodurch die elektrische und/oder optische Leitfähigkeit deutlich verbessert werden kann. Hierbei hatte sich als besonders vorteilhaft erwiesen, das thermochrome Material als $VO_{2-x}$ mit 0<x<0,5, noch vorteilhafter 0<x<0,2 , auszuwählen.

Bei einer weiteren vorteilhaften Ausführungsform ist auf der Folgeschicht wenigstens teilweise, vorteilhaft vollständig, eine Antireflexionsschicht aufgebracht. Vorteilhaft ist diese Antireflexionsschicht aus Siliziumdioxid, Aluminiumoxid, Siliziumnitrid oder Zinnoxid ausgebildet. Alle diese Materialien sind im Infrarotwellenlängenbereich weitgehend transparent ausgebildet und beeinträchtigen folglich die Reflexion bei Temperaturen von kleiner 70 °C nicht wesentlich. Zudem werden die Absorptionseigenschaften verbessert.

Erfindungsgemäß ist oberhalb und/oder unterhalb und/oder zumindest teilweise innerhalb der Folgeschicht wenigstens eine optische Schicht angeordnet. Die optische Schicht kann auch vorteilhaft als Diffusionsbarriereschicht ausgebildet sein und dazu verwendet werden, Atomdiffusion innerhalb der Folgeschicht und/oder zwischen Folgeschicht und Spacerschicht und/oder zwischen Folgeschicht und Antireflexionsschicht zu verhindern. Somit können langlebige und stabile Schichten bereitgestellt werden. Die wenigstens eine optiche Schicht ist aus metallischem Vanadium und/oder aus einer metallischen Vanadiumoxidphase VO$_x$ mit x ≤ 1,5 ausgebildet.

Vorteilhaft weist die wenigstens eine optische Schicht eine Schichtdicke von 1-20 nm auf. Besonders vorteilhaft hat sich eine Schichtdicke von 3-5 nm gezeigt. Diese Schichtdicke lässt sich gleichmäßig aufbringen und genügt bereits als Diffusionsbarriere. Darüber hinaus ist die optische Schicht derart ausgebildet, dass sie die solare Schaltung der Absorption und/oder Emission unterstützt und verbessert.

Besonders vorteilhaft hat es sich erwiesen, die optische Schicht zumindest teilweise, vorteilhaft vollständig auf der Spacerschicht anzuordnen. Hier kann die höchste Effizienz zur solaren Schaltung erreicht werden.

Bei einer weiteren vorteilhaften Ausführungsform weist die Folgeschicht wenigstens eine weitere metallische Komponente auf. Soll beispielsweise die unterstöchiometrische Ausbildung der Folgeschicht zusätzlich durch Fehlstellen im Kristallgitter verstärkt werden, um beispielsweise die elektrische Leitfähigkeit weiter zu verändern/zu erhöhen, so kann die Folgeschicht mit wenigstens einer metallischen Komponente dotiert werden. Hierbei hat sich gezeigt, dass sich beispielsweise Kupfer gut zur Dotierung eignet, da es schlecht in das Kristallgitter des Vanadium(IV)-oxids einbaubar ist. Neben den Fehlstellen im Kristallgitter bedingen sich hierdurch zusätzliche Metalldomänen aus Kupfer. Da die auftretenden Domänen kleiner die eintreffende Wellenlänge sind, mittelt das Licht über die Bereiche mit unterschiedlicher Expedition bzw. optischer Leitfähigkeit und man erhält eine effektive optische Leitfähigkeit, deren Wert größer ist, als die optische Leitfähigkeit des Vanadium(IV)-oxids.

Die gleiche Erhöhung der effektiven, optischen Leitfähigkeit ergibt sich auch durch den Zusatz von Metallen, welche gut in die Kristallgitterstruktur Einbaubar sind. In diesem Fall gilt es aber zu berücksichtigen, dass derartige Metalle, wie beispielsweise Aluminium, stets im Überschuss zugegeben werden muss, so das sich auch hier entsprechende Domänen mit Metall-Vanadium(IV)-oxid mit gelösten Metall ausbilden.

Ferner sind auch metallische Komponenten wie Titan, Eisen, Wolfram, Lithium, Mangan, Kalium, Natrium, Calcium, Yttrium oder Chrom und/oder Kombinationen hieraus denkbar. Den metallischen Komponenten ist neben der Erhöhung der effektiven, optischen Leitfähigkeit auch die Eigenschaft zu eigen, dass sie je nach Einbringungskonzentration eine Erhöhung oder Erniedrigung der Schalttemperatur des Vanadium(IV)-oxids bedingen. Als vorteilhaft haben sich hierbei Atomanteile der metallischen Komponenten Titan, Eisen, Wolfram, Lithium, Mangan, Kalium, Natrium, Calcium, Yttrium oder Chrom und/oder Kombinationen hieraus, welche zusätzlich in die Vanadiumdioxid-Schicht eingebracht sind, von 0,5 bis 20 Atom %, noch vorteilhafter von 3 bis 15 Atom%, ergeben.

Folglich kann auch mit dieser Dotierung die Schalttemperatur gezielt verändert werden, um beispielsweise das Abstrahlverhalten, auch Emissivität genannt, zu verbessern und dazu zu führen, dass die eintreffende Strahlungswärme wieder abgestrahlt wird, umso eine unerwünschte Erhitzung der Mehrschichtmaterialabfolge zu verhindern.

Besonders vorteilhaft weist die eintreffende Strahlung Wellenlängen im Infrarotbereich von 800-80.000 nm auf.

Weiterhin vorteilhaft liegt die Schichtdicke der Spacerschicht im Bereich von 10 - 1500 nm. Zur Schaltung der solaren Absorption haben sich Schichtdicken im Bereich von 10 - 100 nm als vorteilhaft erwiesen, wohingegen bei Schaltung der Emission Schichtdicken im Bereich von 150 - 800 nm vorteilhaft sind.

Die Schichtdicke der Folgeschicht kann vorteilhaft an die Leitfähigkeit im geschalteten Zustand, also bei Temperaturen von größer 70 °C, angepasst werden. Wird beispielsweise annähernd die Leitfähigkeit des Bulk-Materials von 0,0003 Ωcm erreicht, so sind Schichtdicken der Folgeschicht im Bereich von 4-40 nm vorteilhaft. Weiterhin ist es vorteilhaft, wenn der Schichtwiderstand der Materialschicht, also der spezifische Widerstand der Schicht geteilt durch die Dicke der Schicht im Bereich von 10-1000 Ω, vorteilhafter im Bereich von 50-250 Ω, liegt. Der Bereich von 50-250 Ω hat sich als vorteilhaft erwiesen, da es sich hierfür überraschender Weise gezeigt hat, dass dann die optimale Leitfähigkeit unabhängig von der Schichtdicke ausgebildet ist.

Weiterhin vorteilhaft ist die Mehrschichtmaterialabfolge UVbeständig ausgebildet. Dies ist von Vorteil für die Lebensdauer der Mehrschichtmaterialabfolge, welche dadurch erhöht wird.

Bei einer weiteren vorteilhaften Ausführungsform ist die Mehrschichtmaterialabfolge Bestandteil einer Vorrichtung, welche als Flachkollektor und/oder Vakuumröhrenkollektor ausgebildet ist. Die vorteilhafte oben beschriebene Mehrschichtmaterialabfolge ist aufgrund thermochromer Materialbestandteile und der Fähigkeit der gezielten Einstellung der Leitfähigkeit, Absorption und Reflexion besonders gut geeignet, um beispielsweise als Solarkollektor ausgebildet zu sein. In diesem Fall ist beispielsweise das Trägersubstrat als Rohr ausgebildet, in welchem das Heizmedium, zumeist Wasser, zirkuliert. Die seitens der Mehrschichtmaterialabfolge absorbierte Strahlung Energie kann über das Trägersubstrat an das Heizmedium direkt übertragen werden.

Darüber hinaus hat es sich weiterhin als vorteilhaft erwiesen, die Mehrschichtmaterialabfolge als wenigstens ein Bestandteil eines Solarkollektors und/oder Flachkollektors und/oder Vakuumröhrenkollektors und/oder Röhrenkollektors und/oder als Absorber, wie beispielsweise Dachpfannenabsorber, Flächenabsorbers, Plattenabsorbers, Röhrenabsorbers, Absorbermatten, Luftabsorbers oder Hybridabsorbers zu verwenden. So ist beispielsweise denkbar, die Mehrschichtmaterialabfolge auf der Vorderseite und/oder der Rückseite eines Vakuumröhrenkollektors aufzubringen, wobei dann vorteilhaft die Röhre das Trägersubstrat darstellt.

Ferner ist es ebenfalls Aufgabe der Erfindung ein einfaches und kostengünstiges Herstellungsverfahren der Mehrschichtmaterialabfolge bereitzustellen. Das Verfahren zur Herstellung einer Mehrschichtmaterialabfolge weist wenigstens die folgenden Schritte auf:

1. Bereitstellung eines metallischen Trägersubstrat, welches im Infrarot-Wellenlängenbereich eintreffende Strahlung reflektiert;
2. Aufbringung einer Spacerschicht auf das metallische Trägersubstrat;
3. Aufbringung einer Folgeschicht auf die Spacerschicht, wobei in der Folgeschicht wenigstens ein unterstöchiometrischer Materialanteil ausgebildet wird.

Diese Schritte sind selbstverständlich nicht begrenzend zu verstehen, sondern stellen die drei wesentlichen Grundschritte des Herstellungsverfahrens dar.

Darüber hinaus können auch weitere Schritte vorgesehen sein wie beispielsweise das Vorsehen wenigstens einer optischen Schicht, einer Antireflexionsschicht oder dergleichen.

Es hat sich als vorteilhaft erwiesen, bekannte Beschichtungsverfahren, wie zum Beispiel CVD, PECVD, AP CVD, ALD, PVD oder Sol-Gelprozesse zu verwenden. Insbesondere zum Vorsehen des unterstöchiometrischen Materialanteils in der Folgeschicht erfolgt das Aufbringen des Folgeschichtmaterials unter Sauerstoff- und/oder Stickstoffdefizit, zumeist in ArgonAtmosphäre. Durch die reduzierte Bereitstellung von Sauerstoff und/oder Stickstoff kann das für die Folgeschicht vorgesehene Metall, besonders vorteilhaft Vanadium, nicht stöchiometrisch mit dem Reaktionsgas Sauerstoff und/oder Stickstoff abreagieren, so das sich keine vollständige Stoffumsetzung erfolgt.

Die oben beschriebene Dotierung der Folgeschicht erfolgt vorteilhaft durch Co-Sputtern und/oder Implantation und/oder Diffusion und/oder Quenschen. Bei dem Co-Sputtering werden vorteilhaft gleichzeitig Vanadium und wenigstens eine metallische Komponente, beispielsweise Aluminium, gesputtert und als gemeinsame Schicht abgeschieden.

Vorteile und Zweckmäßigkeiten sind der nachfolgenden Beschreibung in Verbindung mit der Zeichnung zu entnehmen. Hierbei zeigen:

Fig. 1    eine schematische Darstellung einer Ausführungsform einer Mehrschichtmaterialabfolge;

Fig. 2    eine weitere schematische Darstellung einer Ausführungsform einer Mehrschichtmaterialabfolge;

Fig. 3    ein Reflexionsschema einer Mehrschichtmaterialabfolge bei Raumtemperatur (gestrichelte Linie) und 150 °C (durchgängige Linie);

Fig. 4    eine grafische Darstellung der berechneten Reflexionen bei einer Wellenlänge von 7 $\mu$m und 1 $\mu$m bei Direktaufbringung auf dem Trägersubstrat gegenüber dem spezifischen Widerstand ; und

Fig. 5    eine grafische Darstellung der Reflektivität einer Mehrschichtabfolge bei Raumtemperatur und einer Temperatur von 150°C.

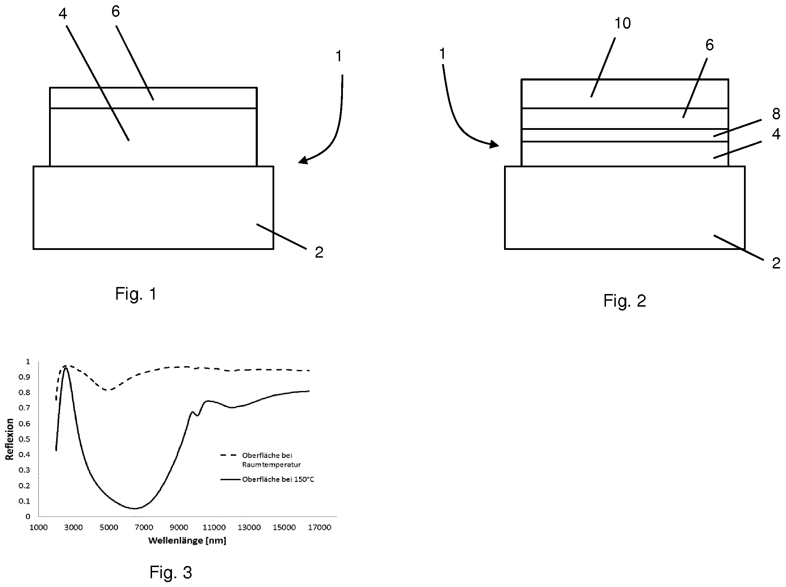

In Figur 1 ist eine 1. Ausführungsform der Mehrschichtmaterialabfolge 1 gezeigt. Das Trägersubstrat 2 wird durch ein Metallblech, beispielsweise ein Aluminiumblech, ausgebildet. Das Aluminiumblech kann zugleich als Rohr eines Solarkollektors ausgebildet sein. Folglich erfolgt die Ausbildung der Mehrschichtmaterialabfolge 1 sowohl auf planen als auch auf gekrümmt ausgebildeten Trägersubstraten 2. Zur vereinfachten Darstellung sind im Folgenden lediglich plane Trägersubstrate 2 dargestellt.

Auf dem Trägersubstrat 2 ist eine Spacerschicht 4 zumindest teilweise aufgebracht. Insbesondere wenn das Trägersubstrat 2 als Rohr ausgebildet ist, hat es sich als vorteilhaft erwiesen, die Spacerschicht 4 nur teilweise auf dem Trägersubstrat 2 vorzusehen, beispielsweise auf der Vorderseite, auf welcher auch die Sonneneinstrahlung auftrifft. Ist hingegen das Trägersubstrat 2 Bestandteil eines Flächenkollektor, so ist auch denkbar, die Spacerschicht 4 vollständig auf dem Trägersubstrat 2 aufzubringen.

In dem in Figur 1 gezeigten Ausführungsbeispiel ist die Spacerschicht 4 mit einem reaktiven Sputter-Verfahren auf das Trägersubstrat 2, hier aus Aluminium ausgebildet, aufgebracht, wobei die Spacerschicht 4 eine Schichtdicke von 500 nm aufweist und aus Titandioxid ausgebildet ist. Hierzu wird ein metallisches Titantarget verwendet, welche in einer Argon/Sauerstoffatmosphäre auf dem Trägersubstrat 2 abgeschieden wird und die Spacerschicht 4 ausbildet.

Dies ist, wie oben bereits ausgeführt lediglich beispielhaft zu verstehen, so dass es auch möglich ist, die Spacerschicht 4 aus Siliziumdioxid, Chromoxinitrid oder dergleichen auszubilden. Vorteilhaft erfolgt die Aufbringung der Titandioxidschicht mittels PVD-Verfahren. Insbesondere dieses Verfahren hat sich als vorteilhaft erwiesen, da hierdurch eine gleichmäßige Aufbringung der Titandioxidschicht gewährleistet werden kann. $\Omega$

Ferner ist auch denkbar, die Spacerschicht 4 über einen Sputter-Prozess aufzubringen, beispielsweise als amorphe oder nanokristalline Schicht.

Anschließend wird auf die Spacerschicht 4 die Folgeschicht 6 aufgebracht, vorteilhaft unterstöchiometrisch. Dies bedeutet, dass die Abscheidung der Folgeschicht 6 unter Sauerstoff- und/oder Stickstoffdefizit erfolgt.

Wie Figur 3 zeigt, kann durch die Mehrschichtmaterialabfolge aus Figur 1 eine massive Reflexionsänderung von Raumtemperatur zu 150 °C erzielt werden. Der Emissionsgrad der Mehrschichtmaterialabfolge ändert sich zudem von ca. 8 auf 60 %. Hierbei ist an der Abszisse die Wellenlänge in Nanometer und an der Ordinate die Reflexion aufgetragen. Man erkennt deutlich, dass die gestrichelte Linie, welche die Reflexion bei Raumtemperatur wiedergibt, einen sehr geringen Emissionsgrad und eine hohe Reflexion aufweist. Bei der entsprechenden Temperaturerhöhung auf 150 °C (durchgehende Linie) wird die Reflexion deutlich reduziert und der Emissionsgrad steigt an.

In Figur 2 ist eine weitere mögliche Ausführungsform einer Mehrschichtmaterialabfolge 2 gezeigt. Auf einem Trägersubstrat 1 wird zunächst eine Spacerschicht 4 aufgebracht. Die Spacerschicht 4 besteht aus Chromoxinitrid und weist eine Schichtdicke von 250 nm auf. Die Spacerschicht 4 ist in diesem Fall als Absorberschicht für das Sonnenlicht ausgebildet, da die weiteren Schichten keine weitere ausreichende Absorption aufweisen. Im Weiteren wird auf die Spacerschicht 4 eine optische Schicht 8 aufgebracht. Diese optische Schicht 8 ist beispielhaft aus Silizium mit einer Schichtdicke von 150 nm ausgebildet. In einem weiteren Herstellungsverfahrensschritt wird auf die optische Schicht 8 die Folgeschicht 6 aufgebracht. In diesem Ausführungsbeispiel weist die Folgeschicht eine Mischung aus Vanadium und Aluminium auf, welche beide während des Ausscheidens mit Sauerstoff als Reaktiosgas beaufschlagt werden. Folglich resultiert eine Vanadium(IV)-oxidschicht, welche Aluminium dotiert ausgebildet ist. Zum Abschluss wird auf die Folgeschicht 6 eine Antireflexionsschicht 10 als Deckschicht und zum Schutz aufgebracht. Besonders vorteilhaft ist die Antireflexionsschicht aus Siliziumdioxid ausgebildet. Selbstverständlich ist dies nur beispielhaft zu verstehen, sodass es auch denkbar ist, dass die optische Schicht 8 innerhalb der Folgeschicht 6 angeordnet ist. Je nach Mengenzugabe des Reaktionsgases (Sauerstoff und/oder Stickstoff) kann zudem die Stöchiometrie der Folgeschicht gesteuert und beeinflusst werden.

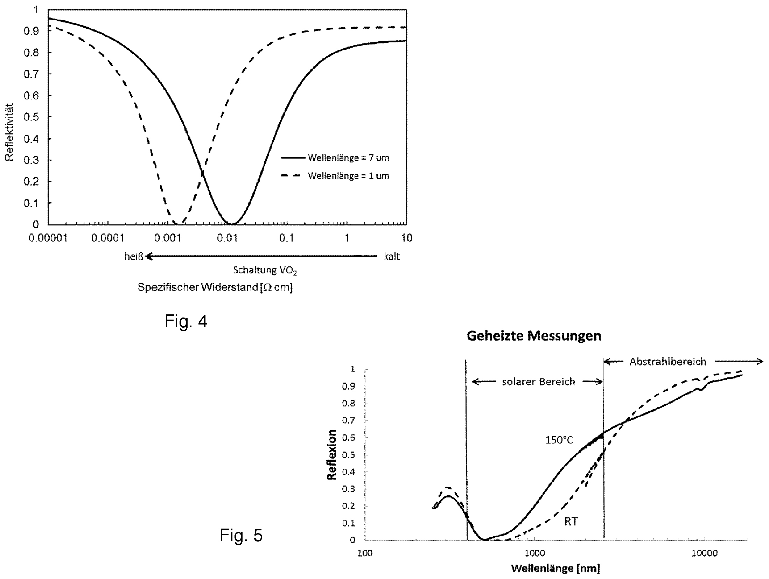

In Figur 4 ist eine grafische Darstellung der Reflexionen bei einer Wellenlänge von 7 $\mu$m und 1 $\mu$m bei Direktaufbringung auf dem Trägersubstrat gegenüber dem spezifischen Widerstand gezeigt. An der Abszisse ist der spezifische Widerstand [Qcm] logarithmisch aufgetragen. An der Ordinate ist die Reflektivität aufgetragen. In dieser Anmeldung werden die Begriffe Reflektivität und Reflexion synonym verwendet. Die hier berechnete Reflektivität ist für eine Einzelschicht aus $VO_2$, welche eine Schichtdicke von 400 nm aufweist, bei einer Streuzeit von 0,5 fs und einer Brechzahl von etwa 3 ermittelt, wobei die Einzelschicht direkt auf dem Trägersubstrat aufgebracht ist, beispielsweise gesputtert. Aus dieser Darstellung lässt sich die optimale Leitfähigkeit berechnen, d.h. die Leitfähigkeit, bei welcher die Materialschichtabfolge optimales Verhalten zeigt und die höchstmögliche Effektivität einnimmt.

Es ist ersichtlich, dass, wie in der durchgängigen Linie gezeigt, bei der eintreffenden Strahlung mit einer Wellenlänge von 7 $\mu$m die Reflexion unter Zunahme des spezifischen Widerstandes zunächst abnimmt, ein Minimum durchläuft um dann wieder letztendlich zu steigen. Das gleiche Verhalten der zu untersuchenden Probe wird bei einer Wellenlänge von 1 $\mu$m erhalten (gestrichelte Linie), wobei allerdings das Minimum dieser Kurve auf der Abszisse nach links, also in den Bereich zu niedrigeren spezifischen Widerständen, verschoben ist.

An diesen Kurven ist durch das jeweilige Minimum ersichtlich, wo der optimale Schaltpunkt zur Schaltung der solaren Emission und/oder Absorption liegt. Die durchgehende Kurve weist ein Minimum bei etwa 0,1 $\Omega$cm auf. Folglich müssen die Schichtbeschaffenheiten der Einzelschicht möglich nahe und/oder identisch mit diesem Minimum eingestellt werden, um die höchste Effizienz zu erhalten. Diese Einstellung erfolgt über die o.g. Materialauswahl $VO_{2-x}$ und möglicher Dotierung. Das gleiche Einstellungsverfahren wird für eine Mehrschichtmaterialabfolge angewendet. Wird die Folgeschicht aus Vanadium(IV)-oxid ausgebildet, muss dessen natürliches Schaltverhalten berücksichtigt werden. Typischerweise wird bei niedrigen Temperaturen von deutlich kleiner 70 °C weit links vom in Figur 5 dargestellten Minimum gestartet. Folglich weist das Vanadium(IV)-oxid lediglich eine geringe Leitfähigkeit auf, da, wie oben bereits beschrieben, dass Vanadium(IV)-oxid unterhalb von 70 °C als Halbleiter vorliegt. Zudem muss auch gewährleistet sein, dass bei erhöhter Temperatur, von größer 70 °C, die spezifische Leitfähigkeit entsprechend hoch ist. Um dies sicherzustellen, hatte sich als vorteilhaft erwiesen, das schaltende Material der Folgeschicht, in diesem Ausführungsbeispiel Vanadium(IV)-oxid, unterstöchiometrisch bereitzustellen, d.h. vorteilhaft als $VO_{2-x}$ mit $0 < x < 0,5$, noch vorteilhafter mit $0 < x < 0,2$. Um die Materialeigenschaften des unterstöchiometrisch abgeschiedenen, schaltenden Materials zusätzlich zu verbessern, kann nach der Abscheidung noch ein Temper-Schritt mit einer Temperatur von größer 500 °C für 5-120 Minuten durchgeführt werden. Dies dient zur gleichmäßigen Anordnung des zu schaltenden Materials in der Folgeschicht.

In Figur 5 ist ein weiterer Kurvenverlauf der Reflexion einer Mehrschichtmaterialabfolge bei Raumtemperatur und einer Temperatur von 150°C gezeigt. Die Mehrschichtmaterialabfolge weist vorteilhaft folgende Schichtabfolgen auf einem Aluminiumträgersubstrat auf. Zunächst ist auf dem Trägersubstrat eine Spacerschicht aus $SiO_x$ mit $x > 1,8$ mit einer Schichtdicke von etwa 40 nm angeordnet und aufgebracht. Darauf ist eine optische Schicht aus $VO_y$ mit $y < 1,6$ mit einer Schichtdicke im Bereich von 4 - 12 nm aufgebracht. Darauf anschließend folgt die Folgeschicht aus $VO_{2-z}$ mit $z < 0,1$ mit einer Schichtdicke im Bereich von 55 - 65 nm. Schließlich bildet die Antireflexionsschicht aus Siliziumdioxid mit einer Schichtdicke im Bereich von 80 - 100 nm die Abschlussschicht. Auf einem Trägersubstrat aus Aluminium ist eine Spacerschicht aus wenigstens einem Siliziumoxid ($SiO_x$) aufgebracht. Auf diese Spacerschicht wurde im Anschluss eine optische Schicht aus metallischem Vanadium aufgetragen, auf welche dann die Folgeschicht aus (unter)stöchiometrischen Vanadium(IV)-oxid und/oder Vanadium (VI)-oxid aufgebracht ist.

Auf die Folgeschicht ist eine Antireflexschicht aus Siliziumdioxid aufgebracht. Die Zusammensetzung der Folgeschicht wurde hierbei so gewählt, dass man mit dem effektiven spezifischen Widerstand links des Minimums der Kurve in Figur 4 startet. Man erkennt den deutlichen Anstieg der Reflexion im solaren Bereich und das Absinken der Reflexion im thermischen Abstrahlbereich bei der Zunahme der Temperatur von Raumtemperatur (gestrichelte Linie) auf 150°C (durchgezogene Linie), der durch die spezielle Zusammensetzung der Folgeschicht aus $VO_{2-z}$ mit $z < 0,1$ mit einer Schichtdicke im Bereich von 55 - 65 nm erhalten wird.

Ferner ist denkbar, dass alle Schichten der Mehrschichtmaterialabfolge, ausgenommen des Trägersubstrat, und/oder wenigstens eine Schicht jeweils eine Schichtdicke von ¼ der Wellenlänge λ aufweisen . für eine Wellenlänge im oder nahe am solaren Spektrum aufweisen. Darüber hinaus ist auch denkbar, dass die Mehrschichtmaterialabfolge insgesamt eine Schichtdicke von ¼ λ für die Wellenlänge im oder nahe am solaren Spektrum aufweist. Besonders vorteilhaft weist die Spacerschicht alleine eine Schichtdicke von ¼ λ auf, so dass eine hohe Effizienz der Schaltung solarer Absorption und/oder Emission bedingt ist. Ferner ist auch denkbar, die wenigstens eine optische Schicht derart auszubilden, dass deren Schichtdicke ganze Vielfache, wie beispielsweise zwei, drei, fünf usw., von ¼ der Wellenlänge λ aufweisen.

## Bezugzeichenliste

| | |
|---|---|
| 1 | Mehrschichtmaterialabfolge |
| 2 | Trägersubstrat |
| 4 | Spacerschicht |
| 6 | Folgeschicht |
| 8 | Optische Schicht |
| 10 | Antireflexschicht |

## Patentansprüche

**1.** Mehrschichtmaterialabfolge (1) zur Energiegewinnung aus Sonnenlicht aufweisend wenigstens ein Trägersubstrat (2) mit reflektierenden Eigenschaften wenigstens im Infrarot-Wellenlängenbereich, wenigstens eine auf dem Trägersubstrat (2) aufgebrachte Spacerschicht (4) mit transparenten Eigenschaften wenigstens im Infrarot-Wellenlängenbereich und wenigstens einer auf der Spacerschicht (4) zumindest teilweise aufgebrachten weiteren Folgeschicht (6), welche wenigstens ein Material aufweist, dessen elektrische Leitfähigkeit durch Wärme- und /oder Strahlungsbeaufschlagung veränderbar ausgebildet ist, wobei die Folgeschicht (6) und/oder die Spacerschicht (4) wenigstens einen unterstöchiometrischen Materialanteil aufweisen,
**dadurch gekennzeichnet, dass**
oberhalb und/oder unterhalb und/oder zumindest teilweise innerhalb der Folgeschicht (6) wenigstens eine optische Schicht (8) angeordnet ist, wobei die optische Schicht (8) aus metallischen Vanadium und/oder aus einer metallischen Vanadiumoxidphase $VO_x$ mit $x \leq 1,5$ ausgebildet ist und wobei über die Änderung der elektrischen Leitfähigkeit der Folgeschicht (6) der solare Absorptionsgrad der Mehrschichtmaterialabfolge (1) einstellbar ist.

**2.** Mehrschichtmaterialabfolge nach Anspruch 1,
**dadurch gekennzeichnet, dass**
die Spacerschicht (4) wenigstens ein Metalloxid und/oder wenigstens ein Metallnitrid aufweist.

**3.** Mehrschichtmaterialabfolge nach Anspruch 1,
**dadurch gekennzeichnet, dass**
das Trägersubstrat (2) aus Metall und/oder zumindest teilweise aus Metalloxid ausgebildet ist.

**4.** Mehrschichtmaterialabfolge nach Anspruch 1,
**dadurch gekennzeichnet, dass**
die Folgeschicht (6) wenigstens ein thermochromes Material aufweist.

**5.** Mehrschichtmaterialabfolge nach Anspruch 4,
**dadurch gekennzeichnet, dass**

das thermochrome Material wenigstens teilweise Vanadium und/oder wenigstens ein Vanadiumoxid aufweist.

6. Mehrschichtmaterialabfolge nach Anspruch 1,
**dadurch gekennzeichnet, dass**
das thermochrome Material unterstöchiometrisch abgeschieden ausgebildet ist.

7. Mehrschichtmaterialabfolge nach Anspruch 6,
**dadurch gekennzeichnet, dass**
das thermochrome Material als $VO_{2-x}$ mit $0 < x < 0,5$ ausgewählt ist.

8. Mehrschichtmaterialabfolge nach Anspruch 1,
**dadurch gekennzeichnet, dass**
auf der Folgeschicht (6) wenigstens eine Antireflexionsschicht (10) aufgebracht ist.

9. Mehrschichtmaterialabfolge nach Anspruch 1,
**dadurch gekennzeichnet, dass**
die Folgeschicht (6) wenigstens eine weitere metallische Komponente aufweist.

10. Verwendung einer Mehrschichtmaterialabfolge (1) nach wenigstens einem der vorangegangenen Ansprüche als wenigstens ein Bestandteil eines Solarkollektors und/oder Flachkollektors und/oder Vakuumröhrenkollektors und/oder Röhrenkollektors und/oder Absorbers.

11. Verfahren zur Herstellung einer Mehrschichtmaterialabfolge (1) nach wenigstens einem der vorangegangenen Ansprüche, wenigstens aufweisend die folgenden Schritte:

- Bereitstellung des metallischen Trägersubstrats (2);
- Aufbringung der Spacerschicht (4) auf das metallische Trägersubstrat (2);
- Aufbringung der Folgeschicht (6) auf die Spacerschicht (4).

## Claims

1. Multilayer material sequence (1) for generating energy from sunlight containing at least one carrier substance (2) with reflective properties at least in the range of infrared wavelengths, at least one spacer layer (4) applied on the carrier substance (2) with transparent properties at least in the range of infrared wavelengths, and at least a further subsequent layer (6) applied at least partially on the spacer layer (4) which contains at least a material whose electrical conductivity is designed modifiable by heat and/or radiation application, wherein the subsequent layer (6) and/or the spacer layer (4) contain at least an understoichiometric material portion, **characterized in that** at least one optical layer (8) is arranged above and/or below and/or at least partially within the subsequent layer (6), wherein the optical layer (8) is designed of metallic vanadium and/or of a metallic vanadium oxide phase $VO_x$ with $x \leq 1.5$, and wherein the solar absorption coefficient of the multilayer material sequence (1) is adjustable by the modification of the electrical conductivity of the subsequent layer (6).

2. Multilayer material sequence according to claim 1, **characterized in that** the spacer layer (4) contains at least a metal oxide and/or a metal nitride.

3. Multilayer material sequence according to claim 1, **characterized in that** the carrier substance (2) is designed of metal and/or at least partially of metal oxide.

4. Multilayer material sequence according to claim 1, **characterized in that** the subsequent layer (6) contains at least a thermochromic material.

5. Multilayer material sequence according to claim 4, **characterized in that** the thermochromic material contains at least partially vanadium and/or at least vanadium oxide.

6. Multilayer material sequence according to claim 1, **characterized in that** the thermochromic material is designed understoichiometric separated.

7. Multilayer material sequence according to claim 6, **characterized in that** the thermochromic material is selected as $VO_{2-x}$ with $0 < x < 0.5$.

8. Multilayer material sequence according to claim 1, **characterized in that** at least one anti-reflective layer (10) is applied on the subsequent layer (6).

9. Multilayer material sequence according to claim 1, **characterized in that** the subsequent layer (6) contains at least one further metallic component.

10. Use of a multilayer material sequence (1) according to at least one of the preceding claims as at least a part of a solar collector and/or flat plate collector and/or vacuum tube collector and/or tube collector and/or absorber.

11. Method of manufacturing of a multilayer material sequence (1) according to at least one of the preceding claims at least comprising the following steps:

   - Supplying of the metallic carrier substance (2);
   - Applying of the spacer layer (4) on the metallic carrier substance (2);
   - Applying of the subsequent layer (6) on the spacer layer (4).

**Revendications**

1. Suite de matériau multicouche (1) pour produire une énergie à partir de la lumière solaire présentant au moins un substrat de support (2) avec des caractéristiques réfléchissantes au moins dans la plage de longueurs d'onde infrarouge, au moins une couche d'espaceur (4) déposée sur le substrat de support (2) avec des caractéristiques transparentes au moins dans la plage de longueurs d'onde infrarouge et au moins avec une autre couche suivante (6) déposée au moins partiellement sur la couche d'espaceur (4), laquelle couche suivante présente au moins un matériau dont la conductivité électrique est formée de manière modifiable par une application de chaleur et/ou de rayonnement, dans laquelle la couche suivante (6) et/ou la couche d'espaceur (4) présentent au moins une proportion de matériau sous-stoechiométrique, **caractérisée en ce que** au-dessus et/ou en-dessous et/ou au moins partiellement à l'intérieur de la couche suivante (6) est agencée au moins une couche optique (8), dans laquelle la couche optique (8) est fabriquée dans du vanadium métallique et/ou dans une phase métallique d'oxyde de vanadium $VO_x$ avec $x \leq 1,5$ et dans laquelle avec la modification de la conductivité électrique de la couche suivante (6) le degré d'absorption solaire de la suite de matériau multicouche (1) peut être réglé.

2. Suite de matériau multicouche selon la revendication 1,
   **caractérisée en ce que**
   la couche d'espaceur (4) présente au moins un oxyde métallique et/ou au moins un nitrure métallique.

3. Suite de matériau multicouche selon la revendication 1,
   **caractérisée en ce que**
   le substrat de support (2) est fabriqué dans un métal et/ou au moins partiellement dans un oxyde métallique.

4. Suite de matériau multicouche selon la revendication 1,
   **caractérisée en ce que**
   la couche suivante (6) présente au moins un matériau thermochromique.

5. Suite de matériau multicouche selon la revendication 4,
   **caractérisée en ce que**
   le matériau thermochromique présente au moins partiellement du vanadium et/ou au moins un oxyde de vanadium.

6. Suite de matériau multicouche selon la revendication 1,
   **caractérisée en ce que**
   le matériau thermochromique est fabriqué en étant isolé de manière sous-stoechiométrique.

7. Suite de matériau multicouche selon la revendication 6,
   **caractérisée en ce que**
   le matériau thermochromique est sélectionné en tant $VO_{2-x}$ avec $0 < x < 0,5$.

**8.** Suite de matériau multicouche selon la revendication 1,
**caractérisée en ce que**
sur la couche suivante (6) est déposée au moins une couche antiréfléchissante (10).

**9.** Suite de matériau multicouche selon la revendication 1,
**caractérisée en ce que**
la couche suivante (6) présente au moins un autre composant métallique.

**10.** Utilisation d'une suite de matériau multicouche (1) selon au moins l'une des revendications précédentes en tant qu'au moins une composante d'un capteur solaire et/ou d'un capteur solaire plan et/ou d'un capteur à tubes sous vide et/ou d'un capteur à tubes et/ou d'un absorbeur.

**11.** Procédé de fabrication d'une suite de matériau multicouche (1) selon au moins l'une des revendications précédentes, présentant au moins les étapes suivantes :

- préparation du substrat de support (2) métallique ;
- dépôt de la couche d'espaceur (4) sur le substrat de support (2) métallique ;
- dépôt de la couche suivante (6) sur la couche d'espaceur (4).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013110118 A1